(19) **Europäisches Patentamt**
**European Patent Office**
**Office européen des brevets**

(11) **EP 2 910 760 A1**

(12) **EUROPEAN PATENT APPLICATION**
published in accordance with Art. 153(4) EPC

(43) Date of publication:
**26.08.2015 Bulletin 2015/35**

(51) Int Cl.:
***F02D 45/00*** *(2006.01)*

(21) Application number: **13847562.9**

(22) Date of filing: **15.10.2013**

(86) International application number:
**PCT/JP2013/077940**

(87) International publication number:
**WO 2014/061649 (24.04.2014 Gazette 2014/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.10.2012 JP 2012229078**

(71) Applicants:
• **TOYOTA JIDOSHA KABUSHIKI KAISHA**
**Toyota-shi, Aichi-ken, 471-8571 (JP)**
• **Fujitsu Ten Limited**
**Kobe-shi, Hyogo 652-8510 (JP)**

(72) Inventors:
• **URANO, Shigeyuki**
**Toyota-shi, Aichi-ken, 471-8571 (JP)**
• **SAWADA, Hiroshi**
**Toyota-shi, Aichi-ken, 471-8571 (JP)**
• **SUZUKI, Yusuke**
**Toyota-shi, Aichi-ken, 471-8571 (JP)**
• **WATANABE, Masatoshi**
**Kobe-shi, Hyogo 652-8510 (JP)**

(74) Representative: **Intès, Didier Gérard André et al**
**Cabinet Beau de Loménie**
**158, rue de l'Université**
**75340 Paris Cedex 07 (FR)**

(54) **IN-CYLINDER PRESSURE DETECTION DEVICE FOR INTERNAL COMBUSTION ENGINE**

(57)     This invention determines whether or not an internal combustion engine is not performing combustion. If the determined result is that the internal combustion engine is not performing combustion, a maximum in-cylinder pressure $P_{max}$ during motoring is identified by an in-cylinder pressure sensor, and a crank angle $\theta_{Pmax}$ corresponding to the maximum in-cylinder pressure $P_{max}$ is detected by a crank angle sensor. Further, a reference crank angle $\theta_{Pmaxtgt}$ corresponding to the engine speed and the engine load factor is identified, and $\theta_{Pmax}$ is corrected so as to become $\theta_{Pmaxtgt}$. Furthermore, the relation between a signal of the crank angle sensor and a crank angle (measured value) corresponding to the signal is corrected so that a measured value of the crank angle corresponding to $P_{max}$ becomes the post-correction crank angle.

*Fig. 6*

```
100 NOT PERFORMING COMBUSTION?
102 ACQUIRE θ Pmax, NUMBER OF REVOLUTIONS AND LOAD FACTOR
104 CORRECT CRANK ANGLE TO θ Pmax = θ Pmaxtgt
106 LEARN CORRECTION AMOUNT
```

**EP 2 910 760 A1**

## Description

### Technical Field

The present invention relates to an in-cylinder pressure detection device for an internal combustion engine, and more particularly to an in-cylinder pressure detection device that detects an in-cylinder pressure of an internal combustion engine using an in-cylinder pressure sensor.

### Background Art

Technology has already been disclosed that corrects a detection error with respect to a reference crank angle position and exactly detects a maximum pressure angle from the relevant reference crank angle position to a position at which an in-cylinder pressure becomes the maximum pressure, as discussed, for example, in Japanese Patent Laid-Open No. 63-9679. According to this technology, more specifically, the in-cylinder pressure of the internal combustion engine during motoring is detected, and a position at which the maximum pressure value thereof occurs is detected as the actual top dead center position of the engine piston. Further, the reference crank angle position is corrected in accordance with the relevant actual top dead center position information, and the maximum pressure angle is determined based on the corrected reference crank angle position.

### Citation List

Patent Literature

    Patent Literature 1: Japanese Patent Laid-Open No. 63-9679
    Patent Literature 2: Japanese Patent Laid-Open No. 2010-236534

### Summary of Invention

### Technical Problem

According to the above described conventional technology, a position at which the maximum pressure value of the internal combustion engine occurs during motoring is detected as the actual top dead center position. However, compression leakage occurs from the compression stroke to the expansion stroke during motoring. Consequently, a deviation arises between the position at which the maximum pressure value occurs and the actual top dead center position. Further, in some cases the influence of an error that is caused by thermal strain or the like is superimposed on a pressure value detected by an in-cylinder pressure sensor.

Therefore, according to the conventional technology that detects a maximum pressure value during motoring using an in-cylinder pressure sensor, and detects the position at which the maximum pressure value occurs as being the actual top dead center position, there is a risk that the influence of an error may be superimposed on a detected value when detecting the actual top dead center position and it will therefore not be possible to accurately detect in-cylinder pressure information that corresponds to the actual crank angle.

The present invention has been made to solve the above described problems, and an object of the present invention is to provide an in-cylinder pressure detection device for an internal combustion engine that is capable of detecting in-cylinder pressure information that corresponds to an actual crank angle with high accuracy.

### Solution to Problem

To achieve the above-described object, a first invention is an in-cylinder pressure detection device for an internal combustion engine, including:

    an in-cylinder pressure sensor which is provided in a predetermined cylinder of the internal combustion engine;
    a crank angle sensor which outputs a signal in accordance with a crank angle of the internal combustion engine;
    maximum in-cylinder pressure crank angle acquisition means for, at a time of motoring or a time of a fuel-cut operation of the internal combustion engine, using the crank angle sensor to acquire a maximum in-cylinder pressure crank angle at a time point at which a maximum in-cylinder pressure is detected by the in-cylinder pressure sensor; and
    correction means for correcting a relation between a signal of the crank angle sensor and a crank angle corresponding to the signal so that the maximum in-cylinder pressure crank angle becomes a TDC;
wherein the correction means includes retardation correction means for, in a case where engine speed of the internal combustion engine is equal to or less than a predetermined value, correcting the maximum in-cylinder pressure crank angle used by the correction means to a value on a retardation side.

A second invention is in accordance with the first invention, wherein:

the smaller that the engine speed is, the further that the value which the retardation correction means corrects the maximum in-cylinder pressure crank angle to is on the retardation side.

A third invention is in accordance with the first or second invention, wherein:

the larger that a charging efficiency of the internal combustion engine is, the further that the value which the retardation correction means corrects the maximum in-cylinder pressure crank angle to is on the retardation side.

A fourth invention is in accordance with any one of the first to third inventions, wherein:

the lower that a water temperature of the internal combustion engine is, the further that the value which the retardation correction means corrects the maximum in-cylinder pressure crank angle to is on the retardation side.

A fifth invention is in accordance with any one of the first to fourth inventions, further including:

determination means for determining whether or not an output deviation is occurring in the maximum in-cylinder pressure; and
restriction means for restricting an operation by the correction means in a case where it is determined that an output deviation is occurring in the maximum in-cylinder pressure.

A sixth invention is in accordance with any one of the first to fifth inventions, further including:

determination means for determining whether or not an output deviation is occurring in the maximum in-cylinder pressure; and
output deviation correction means for, in a case where it is determined that an output deviation is occurring in the maximum in-cylinder pressure, correcting the output deviation.

A seventh invention is in accordance with the fifth or sixth invention, wherein:

the determination means includes means for determining that the output deviation is occurring in a case where an absolute value of a heating value is less than a predetermined value.

To achieve the above-described object, an eighth invention is an in-cylinder pressure detection device for an internal combustion engine, including:

an in-cylinder pressure sensor which is provided in a predetermined cylinder of the internal combustion engine;
a crank angle sensor which outputs a signal in accordance with a crank angle of the internal combustion engine;
maximum in-cylinder pressure crank angle acquisition means for, at a time of motoring or a time of a fuel-cut operation of the internal combustion engine, using the crank angle sensor to acquire a maximum in-cylinder pressure crank angle at a time point at which a maximum in-cylinder pressure is detected by the in-cylinder pressure sensor; and
correction means for correcting a relation between a signal of the crank angle sensor and a crank angle corresponding to the signal so that the maximum in-cylinder pressure crank angle becomes a predetermined reference crank angle;
wherein the correction means includes setting means for setting the reference crank angle to a TDC in an operation region in which engine speed of the internal combustion engine is greater than a predetermined value, and setting the reference crank angle to a value that is on an advancement side relative to the TDC in an operation region in which the engine speed of the internal combustion engine is equal to or less than the predetermined value.

A ninth invention is in accordance with the eighth invention, wherein:

in the operation region in which the engine speed of the internal combustion engine is equal to or less than the predetermined value, the smaller that the engine speed is, the further that the value which the setting means sets the reference crank angle to is on the advancement side relative to the TDC.

A tenth invention is in accordance with the eighth or ninth invention, wherein:

in the operation region in which the engine speed of the internal combustion engine is equal to or less than the predetermined value, the larger that a charging efficiency of the internal combustion engine is, the further that the value which the setting means sets the reference crank angle to is on the advancement side relative to the TDC.

An eleventh invention is in accordance with any one of the eighth to tenth inventions, wherein:

in the operation region in which the engine speed of the internal combustion engine is equal to or less than the predetermined value, the lower that a water temperature of the internal combustion engine is, the further that the value which the setting means sets the reference crank angle to is on the advancement side relative to the TDC.

A twelfth invention is in accordance with any one of the eighth to eleventh inventions, further including:

determination means for determining whether or not an output deviation is occurring in the maximum in-cylinder pressure; and
restriction means for restricting an operation by the correction means in a case where it is determined that an output deviation is occurring in the maximum in-cylinder pressure.

A thirteenth invention is in accordance with any one of the eighth to eleventh inventions, further including:

determination means for determining whether or not an output deviation is occurring in the maximum in-cylinder pressure; and
output deviation correction means for, in a case where it is determined that an output deviation is occurring in the maximum in-cylinder pressure, correcting the output deviation.

A fourteenth invention is in accordance with the twelfth or thirteenth invention, wherein:

the determination means includes means for determining that the output deviation is occurring in a case where an absolute value of a heating value during a period from a compression stroke to an expansion stroke is less than a predetermined value.

**Advantageous Effects of Invention**

According to the first invention, an in-cylinder pressure during motoring or during a fuel-cut operation is measured by an in-cylinder pressure sensor, and a crank angle (maximum in-cylinder pressure crank angle) corresponding to the maximum in-cylinder pressure is acquired based on an output signal of the crank angle sensor. Further, the relation between the signal of the crank angle sensor and a crank angle corresponding to the signal is corrected so that the maximum in-cylinder pressure crank angle becomes the TDC. At such time, if the engine speed is equal to or less than a predetermined value, after correcting the maximum in-cylinder pressure crank angle to a value on the retardation side, the relation between the signal of the crank angle sensor and the crank angle corresponding to the signal is corrected. In an operating region in which the engine speed is low, because the influence of compression leakage in a cylinder is superimposed on an in-cylinder pressure detection value, the maximum in-cylinder pressure crank angle deviates to the advancement side in comparison to when there is no compression leakage. Therefore, according to the present invention, since the relation between a signal of the crank angle sensor and a crank angle corresponding to the signal is corrected after effectively correcting a deviation in the maximum in-cylinder pressure crank angle caused by compression leakage, it is possible to accurately detect an in-cylinder pressure detection value that corresponds to the actual crank angle.
According to the second invention, the smaller that the engine speed is, the further that a position which the maximum in-cylinder pressure crank angle is corrected to is on the retardation side. The smaller that the engine speed is, the greater that the compression leakage becomes. Therefore, according to the present invention, a deviation in the maximum in-cylinder pressure crank angle that is caused by compression leakage can be effectively corrected.
According to the third invention, the larger that the charging efficiency (engine load) is, the further that a position which the maximum in-cylinder pressure crank angle is corrected to is on the retardation side. The larger that the engine load is, the greater that the compression leakage becomes. Therefore, according to the present invention, a deviation in the maximum in-cylinder pressure crank angle that is caused by compression leakage can be effectively corrected.
According to the fourth invention, the lower that the water temperature of the internal combustion engine is, the further that a position which the maximum in-cylinder pressure crank angle is corrected to is on the retardation side. The lower that the water temperature is, the greater that the compression leakage becomes. Therefore, according to the present invention, a deviation in the maximum in-cylinder pressure crank angle that is caused by compression leakage can be effectively corrected.

According to the fifth invention, a correction operation is restricted in a case where an output deviation is occurring in the in-cylinder pressure detection value. Therefore, according to the present invention, it is possible to effectively suppress the occurrence of a situation in which the relation between a signal of the crank angle sensor and a measured value corresponding to the signal is erroneously corrected.

According to the sixth invention, in a case where an output deviation is occurring in the in-cylinder pressure detection value, the output deviation is corrected. Therefore, according to the present invention, it is possible to accurately detect an in-cylinder pressure detection value that corresponds to a crank angle.

According to the seventh invention, it is determined that an output deviation is occurring in a case where an absolute value of a heating value is less than a predetermined value. In a case where an output deviation is not occurring, a heating value transitions in the vicinity of 0, while in a case where an output deviation is occurring, the heating value transitions to a large value that exceeds the vicinity of 0. Therefore, according to the present invention, the existence or non-existence of the occurrence of an output deviation can be determined with high accuracy by comparing an absolute value of a heating value and a predetermined value.

According to the eighth invention, an in-cylinder pressure during motoring or during a fuel-cut operation is measured by an in-cylinder pressure sensor, and a crank angle (maximum in-cylinder pressure crank angle) corresponding to the maximum in-cylinder pressure is identified based on an output signal of the crank angle sensor. Further, the relation between the signal of the crank angle sensor and a crank angle corresponding to the signal is corrected so that the maximum in-cylinder pressure crank angle becomes a predetermined reference crank angle. At such time, if operating in a region in which the engine speed is greater than a predetermined value, the reference crank angle is set to the TDC, and if operating in a region in which the engine speed is equal to or less than the predetermined value, the reference crank angle is set to a value that is on the advancement side relative to the TDC. In an operating region in which the engine speed is low, because the influence of compression leakage in a cylinder is superimposed on an in-cylinder pressure detection value, the maximum in-cylinder pressure crank angle deviates to the advancement side in comparison to when there is no compression leakage. Therefore, according to the present invention, since the relation between a signal of the crank angle sensor and a crank angle corresponding to the signal is corrected based on a reference crank angle in which the influence of compression leakage has been reflected, it is possible to accurately detect an in-cylinder pressure detection value that corresponds to the actual crank angle.

According to the ninth invention, in an operation region in which the engine speed is equal to or less than a predetermined value, the smaller that the engine speed is, the further that the value which the reference crank angle is identified as is on a retardation side. The smaller that the engine speed is, the greater the compression leakage becomes. Therefore, according to the present invention, a reference crank angle in which the influence of compression leakage has been reflected can be accurately identified.

According to the tenth invention, in an operation region in which the engine speed is equal to or less than a predetermined value, the larger that the charging efficiency (engine load) is, the further that the value which the reference crank angle is identified as is on a retardation side. The larger that the engine load is, the greater that the compression leakage becomes. Therefore, according to the present invention, a reference crank angle in which the influence of compression leakage has been reflected can be accurately identified.

According to the eleventh invention, in an operation region in which the engine speed is equal to or less than a predetermined value, the lower that the water temperature of the internal combustion engine is, the further that the value which the reference crank angle is identified as is on a retardation side. The lower that the water temperature is, the greater that the compression leakage becomes. Therefore, according to the present invention, a reference crank angle in which the influence of compression leakage has been reflected can be accurately identified.

According to the twelfth invention, a correction operation is restricted in a case where an output deviation is occurring in the in-cylinder pressure detection value. Therefore, according to the present invention, it is possible to effectively suppress the occurrence of a situation in which a reference crank angle that was identified based on a detection signal of the crank angle sensor is erroneously corrected.

According to the thirteenth invention, in a case where an output deviation is occurring in the in-cylinder pressure detection value, the output deviation is corrected. Therefore, according to the present invention, it is possible to accurately detect an in-cylinder pressure detection value that corresponds to a crank angle.

According to the fourteenth invention, it is determined that an output deviation is occurring in a case where an absolute value of a heating value during a period from a compression stroke to an expansion stroke is less than a predetermined value. In a case where an output deviation is not occurring, a heating value transitions in the vicinity of 0, while in a case where an output deviation is occurring, the heating value transitions to a large value that exceeds the vicinity of 0. Therefore, according to the present invention, the existence or non-existence of the occurrence of an output deviation can be determined with high accuracy by comparing an absolute value of a heating value and a predetermined value.

**Brief Description of the Drawings**

[Figure 1] Figure 1 is a schematic configuration diagram for describing a system configuration as Embodiment 1 of the present invention.

[Figure 2] Figure 2 is a view illustrating an in-cylinder pressure change with respect to a crank angle during motoring.

[Figure 3] Figure 3 is a view for describing in detail the in-cylinder pressure change in the vicinity of TDC illustrated in Figure 2.

[Figure 4] Figure 4 is a view illustrating deviation amounts from the actual TDC of $P_{max}$ with respect to engine speed.

[Figure 5] Figure 5 is a view illustrating a map in which a reference crank angle $\theta_{Pmaxtgt}$ is defined with respect to the engine speed and engine load.

[Figure 6] Figure 6 is a flowchart illustrating a routine that is executed in Embodiment 1 of the present invention.

[Figure 7] Figure 7 is a view illustrating a difference in in-cylinder pressure behavior that depends on the existence or non-existence of an output deviation.

[Figure 8] Figure 8 is a view illustrating heating value behavior that depends on the existence or non-existence of an output deviation.

[Figure 9] Figure 9 is a flowchart illustrating a routine that is executed in Embodiment 2 of the present invention.

[Figure 10] Figure 10 is a view for describing a method that corrects the influence of an output deviation.

**Description of Embodiments**

Hereunder, embodiments of the present invention are described based on the accompanying drawings. Note that elements that are common to the respective drawings are denoted by the same reference symbols, and a duplicate description thereof is omitted. Further, the present invention is not limited by the following embodiments.

**Embodiment 1**

[Configuration of Embodiment 1]

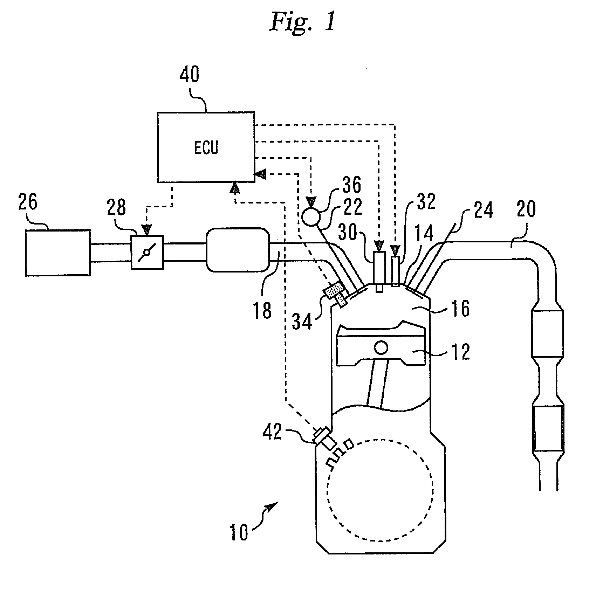

Figure 1 is a schematic configuration diagram for describing a system configuration as Embodiment 1 of the present invention. As shown in Figure 1, the system of the present embodiment includes an internal combustion engine 10. The internal combustion engine 10 is configured as a spark-ignition multi-cylinder engine that uses gasoline as a fuel. A piston 12 is provided inside each cylinder of the internal combustion engine 10, and performs a reciprocating motion in the respective cylinders. The internal combustion engine 10 also includes cylinder heads 14. A combustion chamber 16 is formed between each piston 12 and cylinder head 14. One end of each of an intake passage 18 and an exhaust passage 20 communicates with each combustion chamber 16. An intake valve 22 is arranged at a communication portion between the intake passage 18 and the combustion chamber 16. An exhaust valve 24 is arranged at a communication portion between the exhaust passage 20 and the combustion chamber 16.

An intake valve timing control device 36 that variably controls the valve timing is provided in the intake valve 22. In the present embodiment, it is assumed that a variable valve timing mechanism (VVT) that, by varying a phase angle of a camshaft (omitted from the drawing) with respect to a crankshaft, advances or retards the opening/closing timing while keeping the working angle constant is used as the intake valve timing control device 36.

An air cleaner 26 is mounted in an inlet of the intake passage 18. A throttle valve 28 is disposed downstream of the air cleaner 26. The throttle valve 28 is an electronically controlled valve that is driven by a throttle motor based on the degree of accelerator opening.

A spark plug 30 is mounted in the cylinder head 14 so as to protrude into the combustion chamber 16 from the top of the combustion chamber 16. A fuel injection valve 32 for injecting fuel into the cylinder is also provided in the cylinder head 14. Further, in-cylinder pressure sensors (CPS) 34 for detecting the in-cylinder pressure of each cylinder are incorporated into the respective cylinder heads 14.

As shown in Figure 1, the system of the present embodiment includes an ECU (Electronic Control Unit) 40. In addition to the above described in-cylinder pressure sensor 34, various sensors such as a crank angle sensor 42 for detecting the rotational position of the crankshaft are connected to an input portion of the ECU 40. Further, various actuators such as the above described throttle valve 28, spark plug 30, and fuel injection valve 32 are connected to an output portion of the ECU 40. The ECU 40 controls the operating state of the internal combustion engine 10 based on various kinds of information that are input thereto.

[Operations of Embodiment 1]

The in-cylinder pressure sensor (CPS) is an extremely useful sensor in the respect that the in-cylinder pressure sensor (CPS) can directly detect a combustion state inside a cylinder. Therefore, the output of the CPS is utilized as a control parameter for various kinds of control of the internal combustion engine. For example, the detected in-cylinder pressure is used to calculate an intake air amount that was drawn into the cylinder, to calculate fluctuations in the indicated torque and the like, and to calculate a heating value $PV^\kappa$ or an MFB (mass fraction burned) or the like. These values are utilized to detect misfiring and for optimal ignition timing control and the like.

In order to use a signal acquired from the CPS in various kinds of control, it is necessary for the signal to be exactly synchronized with information regarding the actual crank angle. However, the in-cylinder pressure and the crank angle are information items that are linked by the ECU or the like after the in-cylinder pressure and the crank angle have been measured by respectively different sensors. Consequently, during the process from sensing of an analog signal of these sensors until storage of digital information, various temporal delays arise during low-pass filter (LPF) processing or A/D conversion processing, and there is a risk that it will not be possible to accurately link the in-cylinder pressure information and the crank angle information.

As a method for solving the above described problem, a method (so-called "TDC correction") is known that, using in-cylinder pressure information during motoring or during a fuel-cut operation (that is, at a time of engine driving in a state in which in-cylinder combustion is not being performed, that during motoring includes motoring at a time of fuel injection or at a time when fuel injection is not performed), corrects the relation between the actual crank angle and the crank angle signal that takes a timing at which the in-cylinder pressure becomes a maximum value as compression TDC. However, when TDC correction is performed while the vehicle is actually running, in some cases a phenomenon (compression leakage) arises whereby compressed air leaks out from a gap between a piston ring and a cylinder bore.

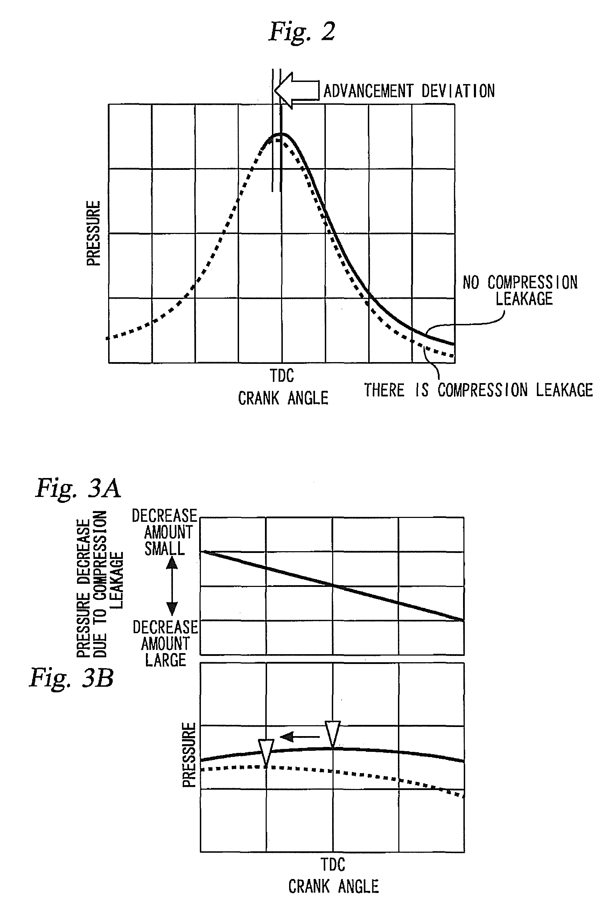

Figure 2 is a view illustrating an in-cylinder pressure change with respect to the crank angle during motoring. As shown in this Figure, it is found that a crank angle corresponding to a maximum in-cylinder pressure $P_{max}$ in a case where there is compression leakage deviates to the advancement side in comparison to the crank angle corresponding to the value $P_{max}$ in a case where there is no compression leakage (that is, the actual TDC). This fact will now be described in detail using Figure 3. Figure 3 is a view for describing in detail the in-cylinder pressure change in the vicinity of TDC illustrated in Figure 2. Note that, Figure 3A is a view that illustrates a pressure decrease amount caused by compression leakage in the vicinity of TDC, and Figure 3B is a view that illustrates a change in $P_{max}$ that depends on the existence or non-existence of compression leakage.

Compression leakage proceeds with time in a region on a high pressure side. Consequently, as shown in Figure 3A, a pressure decrease amount that is caused by compression leakage in the vicinity of TDC increases as the crank angle transitions to the retardation side. Accordingly, as shown in Figure 3B, if the compression leakage illustrated in Figure 3A arises in the vicinity of TDC with respect to which the pressure change is small, the crank angle corresponding to $P_{max}$ deviates to the advancement side.

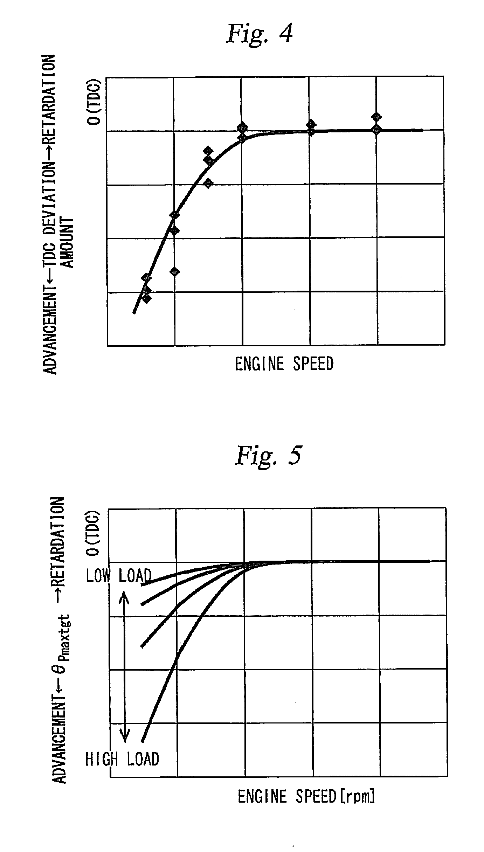

Further, the level of the compression leakage is related to engine speed. Figure 4 is a view illustrating a deviation amount from the actual TDC of $P_{max}$ with respect to the engine speed. As described above, the compression leakage proceeds with time. Consequently, as shown in this Figure, the amount of deviation from the actual TDC of $P_{max}$ increases in a region in which the engine speed is low. Further, because the amount of compression leakage increases as the in-cylinder pressure increases, the greater that the engine load (charging efficiency) is, the greater that the amount of deviation from the actual TDC of $P_{max}$ will be.

Thus, the deviation amount from the actual TDC of $P_{max}$ during motoring varies according to the engine speed and the engine load. Therefore, in the present embodiment a configuration is adopted so that, when performing TDC correction, a crank angle corresponding to $P_{max}$ is corrected so as to become the actual crank angle based on the engine speed and the engine load. Specifically, a crank angle $\theta_{Pmax}$ (maximum in-cylinder pressure crank angle) corresponding to $P_{max}$ that was detected by the in-cylinder pressure sensor 34 is detected by the crank angle sensor 42. Further, an actual crank angle (hereunder, referred to as "reference crank angle") $\theta_{Pmaxtgt}$ at a time of compression leakage that is estimated based on the engine speed and the engine load is identified from a map. Figure 5 is a view illustrating a map in which the reference crank angle $\theta_{Pmaxtgt}$ is defined with respect to the engine speed and the engine load. As shown in the map, in a predetermined low speed region, the lower that the engine speed is or the higher that the engine load is, the further on the advancement side that a value estimated as the reference crank angle $\theta_{Pmaxtgt}$ is. A crank angle correction amount is then calculated so that the detected crank angle $\theta_{Pmax}$ becomes the reference crank angle $\theta_{Pmaxtgt}$, and is reflected in the relation between the in-cylinder pressure detection value and the crank angle detection value. It is thereby possible to accurately calculate the in-cylinder pressure that corresponds to the crank angle.

[Specific processing in Embodiment 1]

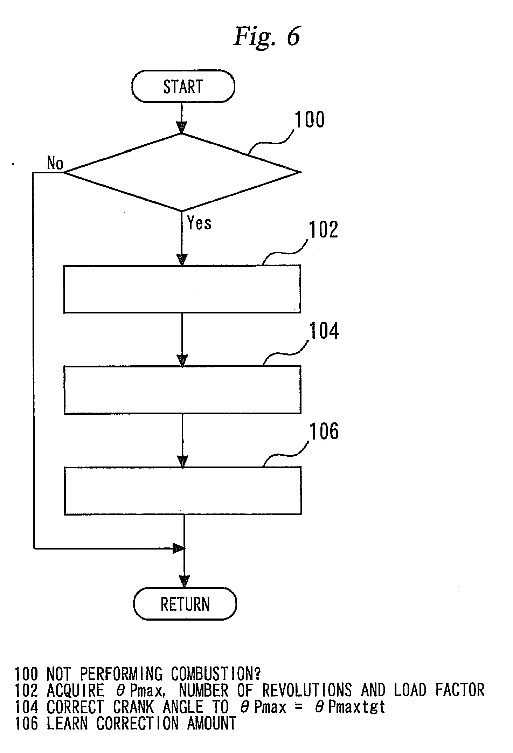

Next, specific processing to perform TDC correction that is executed in the system of the present embodiment will be described referring to a flowchart. Figure 6 is a flowchart that illustrates a routine of Embodiment 1 of the present invention. In the routine illustrated in Figure 6, first, it is determined whether or not the internal combustion engine 10 is not performing combustion (step 100). In this case, specifically, it is determined whether or not the current state is a state during cranking prior to starting the internal combustion engine 10 or is a state during a fuel-cut operation after starting. If it is determined as a result that the state is not one in which the internal combustion engine 10 is not performing combustion, since a motoring waveform of the in-cylinder pressure cannot be detected, the present routine is promptly ended.

On the other hand, in the aforementioned step 100, if it is determined that the engine is not performing combustion, it is determined that it is possible to detect a motoring waveform of the in-cylinder pressure, and therefore the operation moves to the next step. In the next step, the crank angle $\theta_{Pmax}$ that corresponds to $P_{max}$ as well as the engine speed and the engine load factor at that time are acquired (step 102). In this case, more specifically, the maximum in-cylinder pressure $P_{max}$ during motoring is identified using the in-cylinder pressure sensor 34. The crank angle $\theta_{Pmax}$ that corresponds to $P_{max}$ is then detected by the crank angle sensor 42.

Next, the detected crank angle $\theta_{Pmax}$ is corrected to the actual crank angle position that corresponds to $P_{max}$ (step 104). In this case, specifically, the reference crank angle $\theta_{Pmaxtgt}$ that corresponds to the engine speed and the engine load factor acquired in the above described step 102 is identified in accordance with the map shown in Figure 5. Subsequently, in accordance with the following equation (1), the crank angle $\theta_{Pmax}$ detected in the aforementioned step 102 is corrected so as to become the reference crank angle $\theta_{Pmaxtgt}$.

$$\text{Corrected crank angle} = \theta_{Pmax} + \text{crank angle correction amount} \ ... \ (1)$$

$$(\text{crank angle correction amount} = \theta_{Pmaxtgt} - \theta_{Pmax})$$

Next, the crank angle correction amount calculated in the above step 104 is learned (step 106). Specifically, the relation between a signal of the crank angle sensor 42 and the crank angle (measured value) corresponding thereto is corrected so that the measured value of the crank angle corresponding to $P_{max}$ becomes the corrected crank angle ($=\theta_{Pmax}$ + crank angle correction amount).

As described above, according to the in-cylinder pressure detection device of Embodiment 1, a detection signal of the in-cylinder pressure sensor 34 and a detection signal of the crank angle sensor 42 can be accurately synchronized by performing TDC correction with a high level of accuracy. By this means, it is possible to accurately detect the in-cylinder pressure that corresponds to the actual crank angle.

In this connection, in the in-cylinder pressure detection device of Embodiment 1 that is described above, a configuration is adopted that corrects the crank angle $\theta_{Pmax}$ that corresponds to the maximum in-cylinder pressure $P_{max}$ at a time when combustion is not performed to an estimated crank angle (reference crank angle) at a time of compression leakage. However, a configuration may also be adopted that corrects the relevant crank angle $\theta_{Pmax}$ to a crank angle in a case where compression leakage is not occurring, and corrects the relation between the crank angle signal and the measured value so that the crank angle after the relevant correction becomes a predetermined crank angle (for example, TDC). In this case, it is favorable to use the reference crank angle $\theta_{Pmaxtgt}$ as the correction amount (retardation amount) of the crank angle $\theta_{Pmax}$. By this means, the crank angle $\theta_{Pmax}$ can be effectively corrected to a crank angle in a case where there is no compression leakage.

Further, although in the in-cylinder pressure detection device of Embodiment 1 that is described above a configuration is adopted that identifies the reference crank angle $\theta_{Pmaxtgt}$ based on the engine speed and the engine load factor, the reference crank angle $\theta_{Pmaxtgt}$ may also be identified using only either one of the engine speed and the engine load factor. Further, there is a tendency for the influence of compression leakage to increase as the cooling water temperature decreases. Therefore, a configuration may also be adopted in which the cooling water temperature is reflected as another parameter in a calculation to identify the reference crank angle $\theta_{Pmaxtgt}$. More specifically, for example, such a configuration can be realized by storing a reference crank angle $\theta_{Pmaxtgt}$ that corresponds to engine speed, an engine load factor and a cooling water temperature in advance in a map or the like. It is thereby possible to identify the reference crank angle $\theta_{Pmaxtgt}$ with greater accuracy.

In the above described Embodiment 1, $P_{max}$ corresponds to a "maximum in-cylinder pressure" of the above described first invention, and $\theta_{Pmax}$ corresponds to a "maximum in-cylinder pressure crank angle" of the first invention. Further, in the above described Embodiment 1, "maximum in-cylinder pressure crank angle acquisition means" of the above described first invention is realized by the ECU 40 executing the processing in the above described step 102, "retardation correction means" of the first invention is realized by the ECU 40 executing the processing in the above described step 104, and "correction means" of the first invention is realized by the ECU 40 executing the processing in the above described step 106.

In addition, in the above described Embodiment 1, $P_{max}$ corresponds to a "maximum in-cylinder pressure" of the above described eighth invention, and $\theta_{Pmax}$ corresponds to a "maximum in-cylinder pressure crank angle" of the eighth invention. Further, in the above described Embodiment 1, "maximum in-cylinder pressure crank angle acquisition means" of the above described eighth invention is realized by the ECU 40 executing the processing in the above described step 102, and "correction means" of the eighth invention is realized by the ECU 40 executing the processing in the above described steps 104 and 106.

**Embodiment 2**

[Features of Embodiment 2]

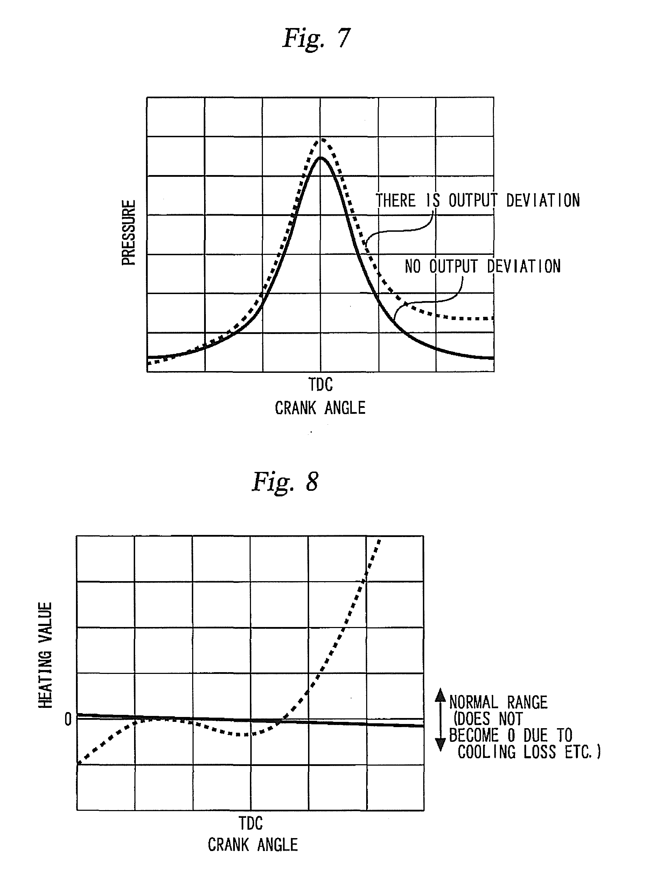

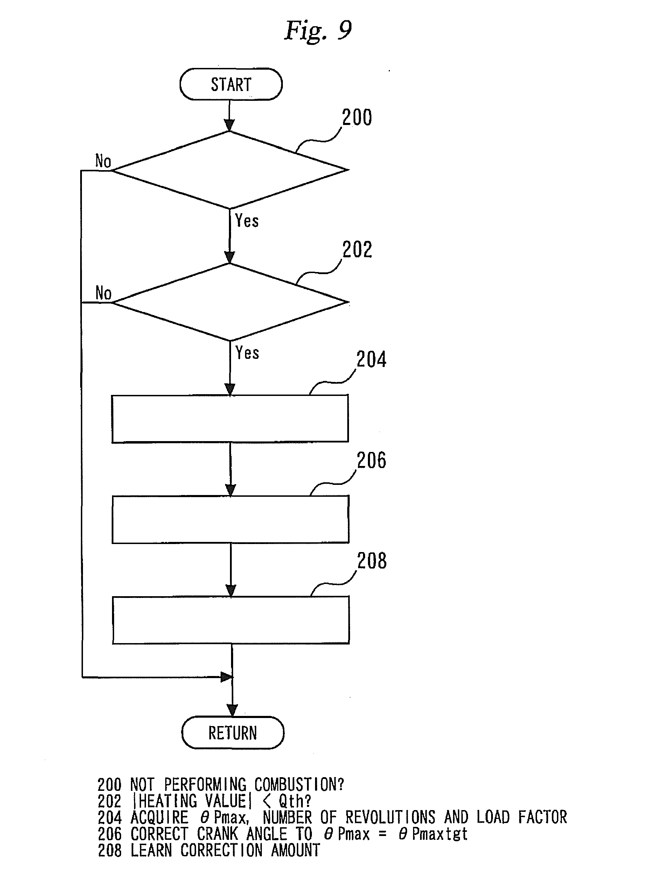

Next, Embodiment 2 of the present invention will be described referring to Figure 7 to Figure 10. The system of Embodiment 2 can be realized by using the hardware configuration illustrated in Figure 1 and causing the ECU 40 to execute the routine shown in Figure 9, described later.

In the system of the above described Embodiment 1, the relation between the crank angle signal and the measured value of the crank angle is corrected using a detection value of the in-cylinder pressure sensor 34 at a time that combustion is not performed. However, for example, in a case such as when the engine transitioned from a high load to a fuel-cut operation, an output deviation that is caused by a thermal expansion or contraction (hereunder, referred to simply as an "output deviation") is superimposed on a detection value that is detected while the sensor temperature of the in-cylinder pressure sensor 34 is changing. Figure 7 is a view that illustrates a difference in the in-cylinder pressure behavior that depends on the existence or non-existence of an output deviation. As shown in Figure 7, in a case where an output deviation is occurring, a deviation arises in the pressure behavior relative to a case where an output deviation is not occurring. Such a case is unsuitable for performing crank angle correction, since $P_{max}$ cannot be accurately identified in such a case.

Therefore, in the system of the present embodiment, a configuration is adopted in which, after determining the existence or non-existence of an output deviation, in-cylinder pressure behavior in which an output deviation does not occur is selected and crank angle correction is implemented. Specifically, the existence or non-existence of an output deviation can be determined based on the heating value behavior at a time that combustion is not performed. Figure 8 is a view that illustrates heating value behavior that depends on the existence or non-existence of an output deviation. As shown in this Figure, at a time that combustion is not performed and an output deviation is not occurring, the heating value $PV^{\kappa}$ is in a range in the vicinity of 0, while in contrast, the heating value increases to exceed the range in the vicinity of 0 in a case where an output deviation is occurring. Accordingly, it is possible to accurately determine the existence or non-existence of an output deviation by determining whether or not the heating value (absolute value) at a time that combustion is not performed is included in a predetermined range.

Thus, it is possible to increase the correction accuracy by, after having determined the existence or non-existence of an output deviation, performing crank angle correction using the in-cylinder pressure behavior during a period in which an output deviation is not occurring.

[Specific processing in Embodiment 2]

Next, specific processing performed in the system of Embodiment 2 will be described. Figure 9 is a flowchart that illustrates a routine that the ECU 40 executes in Embodiment 2 of the present invention. In the routine illustrated in Figure 9, first, the ECU 40 determines whether or not the internal combustion engine 10 is not performing combustion (step 200). In this case, specifically, the same processing as in the above described step 100 is executed. If the ECU 40 determines as a result that the state is not one in which the internal combustion engine 10 is not performing combustion, since a motoring waveform of the in-cylinder pressure cannot be detected, the present routine is promptly ended.

In contrast, in the aforementioned step 200, if the ECU 40 determines that the engine is not performing combustion, the ECU 40 determines that it is possible to detect a motoring waveform of the in-cylinder pressure, and therefore the operation moves to the next step. In the next step, the ECU 40 determines whether or not an absolute value of the heating value is less than a predetermined value $Q_{th}$, (step 202). In this case, specifically, heating values are sequentially calculated during a period from the compression stroke to the expansion stroke while the engine is not performing combustion and are compared with the predetermined value $Q_{th}$. A value that was previously stored as a threshold value for determining whether a heating value at a time that combustion is not being performed is normal is read in as the predetermined value $Q_{th}$.

If it is determined as a result of the processing in the above described step 202 that the relation that |heating value| < $Q_{th}$ does not hold, the ECU 40 determines that TDC correction cannot be performed since an output deviation is occurring, and therefore the present routine is promptly ended. In contrast, if it is determined in the above described step 202 that the relation that |heating value| < $Q_{th}$ holds, the ECU 40 determines that TDC correction can be performed since an output deviation is not occurring, and therefore the operation moves to the next step. In the next step, the crank angle $\theta_{Pmax}$ that corresponds to $P_{max}$ as well as the engine speed and the engine load factor at such time are acquired (step 204). Next, the detected crank angle $\theta_{Pmax}$ is corrected to the actual crank angle position that corresponds to $P_{max}$ (step 206). Next, a crank angle correction amount that was calculated in the aforementioned step 206 is learned (step 208). In this case, specifically, the same processing as in the above described steps 102 to 106 is executed.

As described in the foregoing, according to the in-cylinder pressure detection device of Embodiment 2, since crank angle correction is carried out in a case where an output deviation is not occurring, the relevant TDC correction can be realized with a high degree of accuracy. By this means, since the relation between a detection signal of the in-cylinder pressure sensor 34 and a measured value of the crank angle can be effectively corrected, it is possible to accurately detect the in-cylinder pressure that corresponds to the actual crank angle.

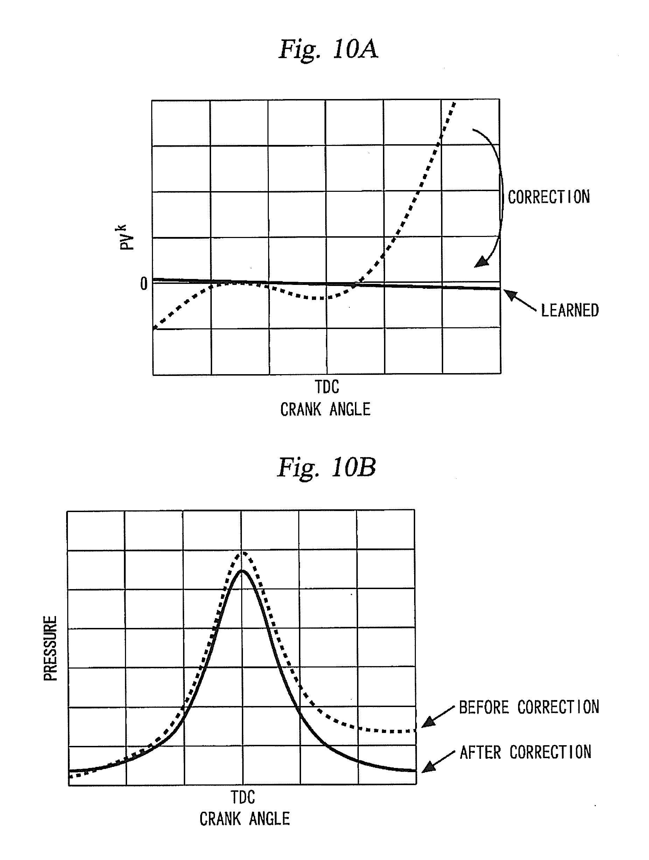

In this connection, according to the in-cylinder pressure detection device of Embodiment 2 that is described above, a configuration is adopted that performs crank angle correction in a case where an output deviation is not occurring. However, a configuration may also be adopted that, even in a case where an output deviation is occurring, performs crank angle correction after correcting the influence of the output deviation that is superimposed on the in-cylinder pressure behavior. Figure 10 is a view for describing a method that corrects the influence of an output deviation. Note that, Figure 10A illustrates $PV^{\kappa}$ behavior before and after correction, and Figure 10B illustrates in-cylinder pressure behavior before and after correction. As shown in Figure 10A, first, the influence of an output deviation is corrected based on $PV^{\kappa}$ before correction. Specifically, for example, the heating value behavior at a normal time is learned in advance, and correction is performed so that the heating value $PV^{\kappa}$ after correction becomes the normal value that was learned. Further, the in-cylinder pressure behavior after correction that is illustrated in Figure 10B can be calculated by dividing the heating value $PV^{\kappa}$ after correction by $V^{\kappa}$. Note that, due to variations in cooling loss caused by the accumulation of deposits and the like, the heating value behavior at a normal time does not become 0 (zero). Consequently, in this case it is necessary to learn an amount of variation with respect to a waveform of a base heating value using an index for deposits or the like, and to learn the heating value behavior at a normal time in a manner that takes these influences into account. A technique for correcting the heating value behavior and converting the heating value behavior to in-cylinder pressure behavior is described in detail in, for example, Japanese Patent Laid-Open No. 2010-236534, and therefore a detailed description thereof is omitted herein.

Further, in the in-cylinder pressure detection device of Embodiment 2 that is described above, a configuration is adopted that corrects the crank angle $\theta_{Pmax}$ corresponding to the maximum in-cylinder pressure $P_{max}$ at a time when combustion is not performed to an estimated value of a crank angle (reference crank angle) at a time of compression leakage. However, a configuration may also be adopted that corrects the relevant crank angle $\theta_{Pmax}$ to a crank angle in a case where compression leakage is not occurring, and corrects the relation between the crank angle signal and the measured value so that the corrected crank angle becomes the actual TDC. In this case, it is favorable to use the reference crank angle $\theta_{Pmaxtgt}$ as the correction amount (retardation amount) of the crank angle $\theta_{Pmax}$. By this means, the crank angle $\theta_{Pmax}$ can be effectively corrected to a crank angle in a case where there is no compression leakage.

In addition, although in the in-cylinder pressure detection device of Embodiment 2 that is described above a configuration is adopted that identifies the reference crank angle $\theta_{Pmaxtgt}$ based on the engine speed and the engine load factor, the reference crank angle $\theta_{Pmaxtgt}$ may also be identified using only either one of the engine speed and the engine load factor. Further, there is a tendency for the influence of compression leakage to increase as the cooling water temperature decreases. Therefore, a configuration may also be adopted in which the cooling water temperature is reflected as another parameter in a calculation to identify the reference crank angle $\theta_{Pmaxtgt}$. More specifically, for example, such a configuration can be realized by storing a reference crank angle $\theta_{Pmaxtgt}$ that corresponds to engine speed, an engine load factor and a cooling water temperature in advance in a map or the like. It is thereby possible to identify the reference crank angle $\theta_{Pmaxtgt}$ with greater accuracy.

Note that, in the above described Embodiment 2, "determination means" and "restriction means" of the above described fifth and twelfth inventions are realized by the ECU 40 executing the processing in the above described step 202.

**Reference Signs List**

10    Internal combustion engine
12    Piston
14    Cylinder head
16    Combustion chamber
18    Intake passage
20    Exhaust passage

22    Intake valve
24    Exhaust valve
26    Air cleaner
28    Throttle valve
30    Spark plug
32    Fuel injection valve
34    In-cylinder pressure sensor (CPS)
36    Intake valve timing control device (WT)
40    ECU (electronic control unit)
42    Crank angle sensor

**Claims**

1. An in-cylinder pressure detection device for an internal combustion engine, comprising:

   an in-cylinder pressure sensor which is provided in a predetermined cylinder of the internal combustion engine;
   a crank angle sensor which outputs a signal in accordance with a crank angle of the internal combustion engine;
   maximum in-cylinder pressure crank angle acquisition means for, at a time of motoring or a time of a fuel-cut operation of the internal combustion engine, using the crank angle sensor to acquire a maximum in-cylinder pressure crank angle at a time point at which a maximum in-cylinder pressure is detected by the in-cylinder pressure sensor; and
   correction means for correcting a relation between a signal of the crank angle sensor and a crank angle corresponding to the signal so that the maximum in-cylinder pressure crank angle becomes a TDC;
   wherein the correction means includes retardation correction means for, in a case where engine speed of the internal combustion engine is equal to or less than a predetermined value, correcting the maximum in-cylinder pressure crank angle used by the correction means to a value on a retardation side.

2. The in-cylinder pressure detection device for an internal combustion engine according to claim 1, wherein the smaller that the engine speed is, the further that the value which the retardation correction means corrects the maximum in-cylinder pressure crank angle to is on the retardation side.

3. The in-cylinder pressure detection device for an internal combustion engine according to claim 1 or 2, wherein the larger that a charging efficiency of the internal combustion engine is, the further that the value which the retardation correction means corrects the maximum in-cylinder pressure crank angle to is on the retardation side.

4. The in-cylinder pressure detection device for an internal combustion engine according to any one of claims 1 to 3, wherein the lower that a water temperature of the internal combustion engine is, the further that the value which the retardation correction means corrects the maximum in-cylinder pressure crank angle to is on the retardation side.

5. The in-cylinder pressure detection device for an internal combustion engine according to any one of claims 1 to 4, further comprising:

   determination means for determining whether or not an output deviation is occurring in the maximum in-cylinder pressure; and
   restriction means for restricting an operation by the correction means in a case where it is determined that an output deviation is occurring in the maximum in-cylinder pressure.

6. The in-cylinder pressure detection device for an internal combustion engine according to any one of claims 1 to 5, further comprising:

   determination means for determining whether or not an output deviation is occurring in the maximum in-cylinder pressure; and
   output deviation correction means for, in a case where it is determined that an output deviation is occurring in the maximum in-cylinder pressure, correcting the output deviation.

7. The in-cylinder pressure detection device for an internal combustion engine according to claim 5 or 6, wherein:

the determination means includes means for determining that the output deviation is occurring in a case where an absolute value of a heating value is less than a predetermined value.

8.  An in-cylinder pressure detection device for an internal combustion engine, comprising:

    an in-cylinder pressure sensor which is provided in a predetermined cylinder of the internal combustion engine; a crank angle sensor which outputs a signal in accordance with a crank angle of the internal combustion engine; maximum in-cylinder pressure crank angle acquisition means for, at a time of motoring or a time of a fuel-cut operation of the internal combustion engine, using the crank angle sensor to acquire a maximum in-cylinder pressure crank angle at a time point at which a maximum in-cylinder pressure is detected by the in-cylinder pressure sensor; and
    correction means for correcting a relation between a signal of the crank angle sensor and a crank angle corresponding to the signal so that the maximum in-cylinder pressure crank angle becomes a predetermined reference crank angle;
    wherein the correction means includes setting means for setting the reference crank angle to a TDC in an operation region in which engine speed of the internal combustion engine is greater than a predetermined value, and setting the reference crank angle to a value that is on an advancement side relative to the TDC in an operation region in which the engine speed of the internal combustion engine is equal to or less than the predetermined value.

9.  The in-cylinder pressure detection device for an internal combustion engine according to claim 8, wherein, in the operation region in which the engine speed of the internal combustion engine is equal to or less than the predetermined value, the smaller that the engine speed is, the further that the value which the setting means sets the reference crank angle to is on the advancement side relative to the TDC.

10. The in-cylinder pressure detection device for an internal combustion engine according to claim 8 or 9, wherein, in the operation region in which the engine speed of the internal combustion engine is equal to or less than the predetermined value, the larger that a charging efficiency of the internal combustion engine is, the further that the value which the setting means sets the reference crank angle to is on the advancement side relative to the TDC.

11. The in-cylinder pressure detection device for an internal combustion engine according to any one of claims 8 to 10, wherein, in the operation region in which the engine speed of the internal combustion engine is equal to or less than the predetermined value, the lower that a water temperature of the internal combustion engine is, the further that the value which the setting means sets the reference crank angle to is on the advancement side relative to the TDC.

12. The in-cylinder pressure detection device for an internal combustion engine according to any one of claims 8 to 11, further comprising:

    determination means for determining whether or not an output deviation is occurring in the maximum in-cylinder pressure; and
    restriction means for restricting an operation by the correction means in a case where it is determined that an output deviation is occurring in the maximum in-cylinder pressure.

13. The in-cylinder pressure detection device for an internal combustion engine according to any one of claims 8 to 11, further comprising:

    determination means for determining whether or not an output deviation is occurring in the maximum in-cylinder pressure; and
    output deviation correction means for, in a case where it is determined that an output deviation is occurring in the maximum in-cylinder pressure, correcting the output deviation.

14. The in-cylinder pressure detection device for an internal combustion engine according to claim 12 or 13, wherein:

    the determination means includes means for determining that the output deviation is occurring in a case where an absolute value of a heating value during a period from a compression stroke to an expansion stroke is less than a predetermined value.

*Fig. 1*

# Fig. 2

ADVANCEMENT DEVIATION

PRESSURE

NO COMPRESSION LEAKAGE

THERE IS COMPRESSION LEAKAGE

TDC
CRANK ANGLE

# Fig. 3A

PRESSURE DECREASE DUE TO COMPRESSION LEAKAGE

DECREASE AMOUNT SMALL

DECREASE AMOUNT LARGE

# Fig. 3B

PRESSURE

TDC
CRANK ANGLE

Fig. 4

Fig. 5

## *Fig. 6*

100 NOT PERFORMING COMBUSTION?
102 ACQUIRE $\theta$ Pmax, NUMBER OF REVOLUTIONS AND LOAD FACTOR
104 CORRECT CRANK ANGLE TO $\theta$ Pmax = $\theta$ Pmaxtgt
106 LEARN CORRECTION AMOUNT

## Fig. 7

PRESSURE

THERE IS OUTPUT DEVIATION

NO OUTPUT DEVIATION

TDC
CRANK ANGLE

## Fig. 8

HEATING VALUE

0

NORMAL RANGE
(DOES NOT
BECOME 0 DUE TO
COOLING LOSS ETC.)

TDC
CRANK ANGLE

*Fig. 9*

200 NOT PERFORMING COMBUSTION?
202 |HEATING VALUE| < Qth?
204 ACQUIRE $\theta$ Pmax, NUMBER OF REVOLUTIONS AND LOAD FACTOR
206 CORRECT CRANK ANGLE TO $\theta$ Pmax = $\theta$ Pmaxtgt
208 LEARN CORRECTION AMOUNT

*Fig. 10A*

*Fig. 10B*

## INTERNATIONAL SEARCH REPORT

International application No.

PCT/JP2013/077940

| A. CLASSIFICATION OF SUBJECT MATTER |
|---|
| *F02D45/00*(2006.01)i |

According to International Patent Classification (IPC) or to both national classification and IPC

| B. FIELDS SEARCHED |
|---|

Minimum documentation searched (classification system followed by classification symbols)
F02D45/00, F02D41/00-41/40, F02P5/145-5/155

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 9-195844 A  (Unisia Jecs Corp.), 29 July 1997 (29.07.1997), entire text (Family: none) | 1-14 |
| A | JP 8-28338 A  (Unisia Jecs Corp.), 30 January 1996 (30.01.1996), entire text & US 5611311 A          & DE 19525240 A1 | 1-14 |
| A | JP 63-9679 A  (Honda Motor Co., Ltd.), 16 January 1988 (16.01.1988), entire text & US 4744243 A          & GB 2192028 A & DE 3721162 A1 | 1-14 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 January, 2014 (14.01.14) | 28 January, 2014 (28.01.14) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/077940

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-133659 A  (Denso Corp.),<br>26 May 2005 (26.05.2005),<br>entire text<br>& US 2005/0092297 A1    & DE 102004052703 A1<br>& FR 2861807 A1          & CN 1611759 A | 1-14 |
| A | JP 62-197670 A  (Nippondenso Co., Ltd.),<br>01 September 1987 (01.09.1987),<br>entire text<br>(Family: none) | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63009679 A

- JP 2010236534 A